(19) Europäisches Patentamt
European Patent Office
Office européen des brevets

(11) **EP 0 999 619 A1**

(12) **EUROPEAN PATENT APPLICATION**
published in accordance with Art. 158(3) EPC

(43) Date of publication:
**10.05.2000 Bulletin 2000/19**

(51) Int. Cl.⁷: **H01S 3/038**, H01S 3/097

(21) Application number: **99919644.7**

(86) International application number:
**PCT/JP99/02584**

(22) Date of filing: **18.05.1999**

(87) International publication number:
**WO 99/60676 (25.11.1999 Gazette 1999/47)**

(84) Designated Contracting States:
**DE FR GB**

(30) Priority: **20.05.1998 JP 13809298**

(71) Applicant:
**KABUSHIKI KAISHA TOSHIBA
Kawasaki-shi, Kanagawa-ken 210-0913 (JP)**

(72) Inventor: **NAKAMUTA, Hironori
Ohtawara-shi, Tochigi-ken 324-0058 (JP)**

(74) Representative: **Shindler, Nigel
BATCHELLOR, KIRK & CO.
102-108 Clerkenwell Road
London EC1M 5SA (GB)**

(54) **PULSED GAS LASER DEVICE**

(57) This invention relates to a pulsed gas laser oscillator comprising:

a first main electrode 24, a cylindrical discharge tube 21 of insulator containing medium gas therein to form a main discharging passage, and a second main electrode 25, those of which are longitudinally arranged in the above order, a pair of mirrors 22, 23 constituting an optical resonator outside the first main electrode and the second main electrode, and a power source 27 supplying a voltage for main discharge between the first main electrode and the second main electrode,
characterized in that a dielectric hollow cylinder 40 and an auxiliary electrode 41 arranged adjacent to the dielectric hollow cylinder are provided close to at least one of the first main electrode and the second main electrode, and an auxiliary electrode-voltage supplying means 28 to supply a voltage to the auxiliary electrode is provided to form a plasma electrode 25a at the region inside the dielectric hollow cylinder in operation.

FIGURE 1

## Description

Field of the technology

This invention relates to a pulsed gas laser oscillator with gas laser medium discharged to be excited for emitting a laser beam.

Background of the technology

A pulsed gas laser oscillator in ultraviolet region such as nitrogen ($N_2$) laser or excimer laser is utilized for fluorescence analysis, remote sensing equipment using light absorption of gas, applications using photochemical reaction process, or other laser apparatus. As for the pulsed laser oscillator, a transverse discharge-excitation apparatus by ultraviolet preliminary ionization, using an elongated electrode along the optical axis of laser oscillation is in use.

However in the pulsed gas laser oscillator by transverse discharge-excitation, discharge region is hard to be excited uniformly, so the apparatus is apt to generate fluctuation of laser output per each pulse. Furthermore in the pulsed gas laser oscillator by transverse discharge-excitation, as the configuration of cross section of output laser beam is noncircular such as rectangular, the transmission efficiency of the laser oscillator deteriorates in the case where the transmission is done with optical fibers whose cross sections are usually circular.

To avoid this inconvenience, there is a method which utilizes a discharge-excitation in the direction of laser optical axis i.e. in the longitudinal direction, disclosed in Japanese Patent Disclosure Hei/1-103889, Hei/4-25187, Hei/8-316550, or Hei/9-83042 etc. Longitudinal discharge-excitation method itself is known as, for example, He-Ne laser tubes, argon ion laser tubes, $CO_2$ laser tubes. However in those tubes, discharge usually starts when a high voltage pulse is heaped up on the supplied voltage.

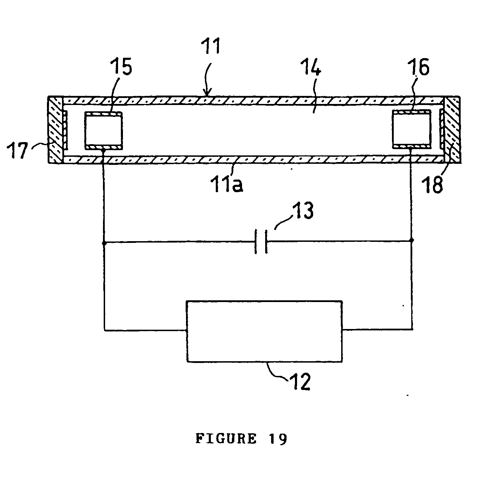

As schematically shown in Fig. 19, the pulsed gas laser oscillator by longitudinal discharge-excitation is constituted of gas laser tube 11 and power source 12 which is connected electrically with the tube to supply it a starting trigger voltage and an operating voltage. Power source 12 has a high voltage generator and a high voltage trigger source, and connected to laser tube 11 through storage capacitor 13.

Laser tube 11 has cylindrical insulator tube 11a as a hermetic envelope, in which laser medium 14 such as nitrogen gas is contained by a predetermined pressure. Both ends of insulator tube 11a are hermetically sealed with output mirror 17 and high reflection mirror 18 respectively. Furthermore, cylindrical cathode 15 and anode 16 which constitute a pair of electrodes for discharging are provided inside the vicinity thereof.

In a nitrogen gas laser oscillator like the above, a high trigger voltage is supplied between the anode and the cathode by the trigger circuit in power source 12, then electrical breakdown between anode 16 and cathode 15 through the medium gas by means of the trigger voltage being supplied thereto takes place, and consequently an electric charge stored in storage capacitor 13 flows between the anode and the cathode, followed by excitation of the laser medium. Thus an optical resonance between high reflection mirror 18 and output mirror 17 takes place, and then a laser beam output is to be obtained from output mirror 17.

The pulsed gas laser oscillator by longitudinal discharge-excitation mentioned heretofore has the advantage of obtaining an output laser beam whose cross section is circular. However a considerably high trigger voltage and a main discharge voltage must be supplied between the cathode and the anode in order that stable high repetition laser oscillation can be gotten. In this case, there is some possibility that a phenomenon where a discharge current concentrates locally on a region called "bright spot" of the cathode or the anode takes place, and consequently material of the cathode or the anode may be spattered. Such spattering results in some inconveniences such as deterioration of laser oscillation efficiency because of soiling the mirrors, or harming voltage resistibility of the insulator tube forming a main discharging passage caused by adhering to the inside surface of the insulator tube.

Insufficient preliminary ionization also causes doughnut-configured intensity distribution resulting from insufficient excitation at the central portion with reference to a cross section of laser beam, and instability or unevenness of output per each pulse. Therefore, further room for improvement has remained.

An object of the present invention is to provide a pulsed gas laser oscillator having a high repetition pulse oscillation without generating a hot spot at a main discharge electrode and generating an output laser beam having a circular cross section and uniform distribution of intensity.

To realize the object mentioned above, a pulsed gas laser oscillator according to the present invention comprises a first main electrode, a cylindrical discharge tube of insulator containing medium gas therein to form a main discharging passage, and a second main electrode, those of which are arranged longitudinally in the above order, a pair of mirrors constituting an optical resonator outside both the first main electrode and the second main electrode, and a power source supplying a voltage for main discharge between the first main electrode and the second main electrode, wherein a dielectric hollow cylinder, an auxiliary electrode positioned adjacent to said dielectric hollow cylinder close to at least one of the first main electrode and the second main electrode, and an auxiliary electrode-voltage supplying device which supplies a voltage to the auxiliary electrode so as to generate a plasma electrode in the inside of the dielectric hollow cylinder in operation are provided.

Brief description of the drawings

Fig.1 is a cross section of main portion and a circuit diagram showing one embodiment of the present invention;

Fig.2 is a schematic diagram to explain the action of the embodiment in Fig.1, and a graph to explain magnitude of supplied voltage;

Fig.3 is also a graph to explain the action of the embodiment in Fig.1;

Fig.4 is a graph to explain favorable application range of the present invention;

Fig.5 is a cross section of the main portion showing another embodiment of the present invention;

Fig.6 is a cross section showing another embodiment of the present invention;

Fig.7 is a cross section showing another embodiment of the present invention;

Fig.8 is a cross section showing another embodiment of the present invention;

Fig.9 is a cross section and a circuit diagram showing another embodiment of the present invention;

Fig.10 is a schematic diagram to explain the action of the embodiment in Fig.9;

Fig.11 is a schematic diagram showing another embodiment of the present invention;

Fig.12 is a wave form diagram to explain the action of Fig.11;

Fig.13 is a schematic diagram showing another embodiment of the present invention;

Fig.14 is a wave form diagram to explain the action of Fig.13;

Fig.15 is a cross section of the main portion showing another embodiment of the present invention;

Fig.16 is a cross section of the main portion showing another embodiment of the present invention;

Fig.17 is a cross section and a circuit diagram showing another embodiment of the present invention;

Fig.18 is a cross section and a circuit diagram showing another embodiment of the present invention; and

Fig.19 is a schematic diagram to explain a conventional example.

Detailed description of the invention

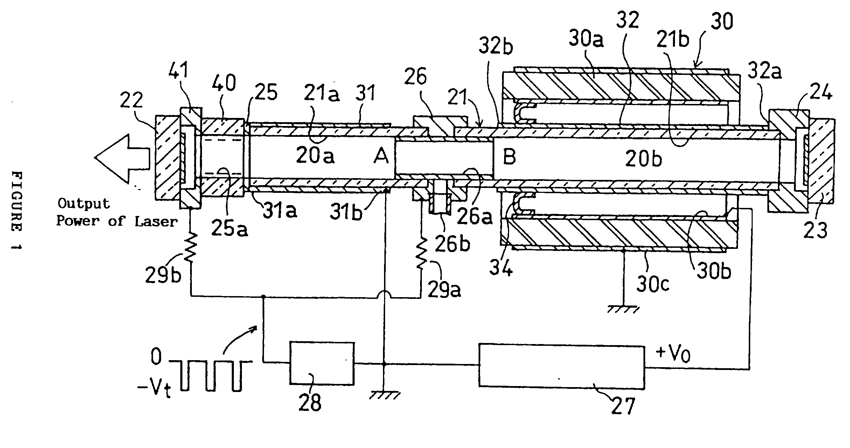

Explanation of embodiments will be done as follows, referring to the drawings. The same portion is represented by the same mark in those figures. In the embodiment shown in Fig.1, inside discharge tube 21 of cylindrical insulator ceramics forming a hermetic envelope of a pulsed gas laser tube, nitrogen gas is contained by a predetermined pressure as medium gas of a laser tube. At the left side and the right side of discharge tube 21 in the Figure, output mirror 22 of glass plate having an output mirror film inside and a high reflection mirror 23 having a high reflection mirror film inside are hermetically stuck respectively, forming an optical resonator.

In discharge tube 21 forming a main discharging passage, first cylinder portion 21a and second cylinder portion 21b of insulator ceramics are arranged longitudinally in the direction of the laser optical axis with intervention of intermediate electrode 26 of metal ring and hermetically stuck together. Inside the joints of both cylinder portions 21a, 21b, to intermediate electrode 26, intermediate electrode cylinder 26a of metal cylinder is provided. To intermediate electrode 26, exhaust pipe 26b of metal is connected.

On the left end of the first cylinder portion 21a of the discharge tube in the Figure, cathode 25 whose inner surface is exposed to the discharging passage is hermetically stuck, and first outer conducting body 31 lengthened from cathode 25 is tightly set on the outer surface of the portion 21a. Other end portion 31b of first outer conducting body 31 is lengthened as far as the position corresponding to the vicinity of the end portion of intermediate electrode cylinder portion 26a.

Furthermore, to the left side of cathode 25 in the Figure, dielectric cylinder 40 of high dielectric constant ceramics is hermetically joined, and auxiliary electrode 41 of metal ring is hermetically joined to the left end thereof, besides output mirror 22 is hermetically joined to auxiliary electrode 41. With regard to cathode 25, auxiliary electrode 41, and dielectric cylinder 40 intervening between them, plasma cathode 25a is formed at the inner surface of dielectric cylinder 40 and its inside region, as mentioned later. Thus first discharging passage 20a is formed between plasma cathode 25a and intermediate electrode cylinder portion 26a, both of which face to each other.

On the right end of second cylinder portion 21b of the discharge tube in the Figure, anode 24 of metal ring is hermetically stuck, high reflection mirror 23 is hermetically set on the tip of anode 24. Thus second discharging passage 20b is formed between intermediate electrode cylinder portion 26a and anode 24, both of which face to each other. The ratio of the length of first discharging passage 20a to that of second discharging passage 20b in the direction of the axis is set to be a predetermined value, as described later. Discharge tube 21 contains nitrogen gas in its inside by a predetermined pressure, after evacuated through exhaust pipe 26b. Then exhaust pipe 26b is to be sealed.

Moreover, second outer conducting body 32 is also tightly set on the outer surface of second cylinder portion 21b of the discharge tube. One end portion 32a of second outer conducting body 32 is fixed and electrically short-circuited to anode 24, and the other end portion 32b is lengthened as far as the position corresponding to the vicinity of the end portion of intermediate electrode cylinder portion 26a.

On the periphery of second cylinder portion 21b and second outer conducting body 32 of the discharge tube, coaxial storage capacitor 30 with cylindrical figure is provided coaxially. With regard to coaxial storage capacitor 30 with cylindrical figure , inner periphery electrode 30b and outer periphery electrode 30c are stuck to the inner surface and outer surface of dielectric hollow cylinder 30a of high dielectric constant ceramics respectively. Inner periphery electrode 30b is directly connected and electrically short-circuited to end portion 32b of second outer conducting body 32 on the left side of the Figure by means of conductor ring 34 with high electric conductivity and high mechanical strength. Outer periphery electrode 30c is grounded as a grounding electrode as well as the negative terminal of first power source 27. Inner periphery electrode 30b of coaxial storage capacitor 30 with cylindrical figure is also connected electrically to the positive terminal of first power source 27.

Therefore, the positive terminal side of coaxial storage capacitor 30 with cylindrical figure which stores electric charge for main discharge is directly connected and electrically short-circuited to the whole outer periphery of end portion 32b of the second outer conducting body which is placed adjacent to the intermediate electrode portion of the gas laser tube with intervention of conductor ring 34. Further, conductor ring 34 has also a function to make the laser tube hold coaxial capacitor 30 mechanically, and coaxial capacitor 30 is covered with insulating resin which is not shown in the Figure.

Intermediate electrode 26 and auxiliary electrode 41 of the cathode side are connected electrically to second power source 28 through high resistance elements 29a, 29b for trigger current control respectively, in order that pulse-shaped trigger voltage be supplied. Second power source 28 is to generate a controlling trigger pulse voltage corresponding to the repetition frequency of pulsed laser oscillation, and comprises an inner power source, a pulse transformer, etc.. Second power source 28 is connected to intermediate electrode 26 so as to supply trigger pulse voltage thereto.

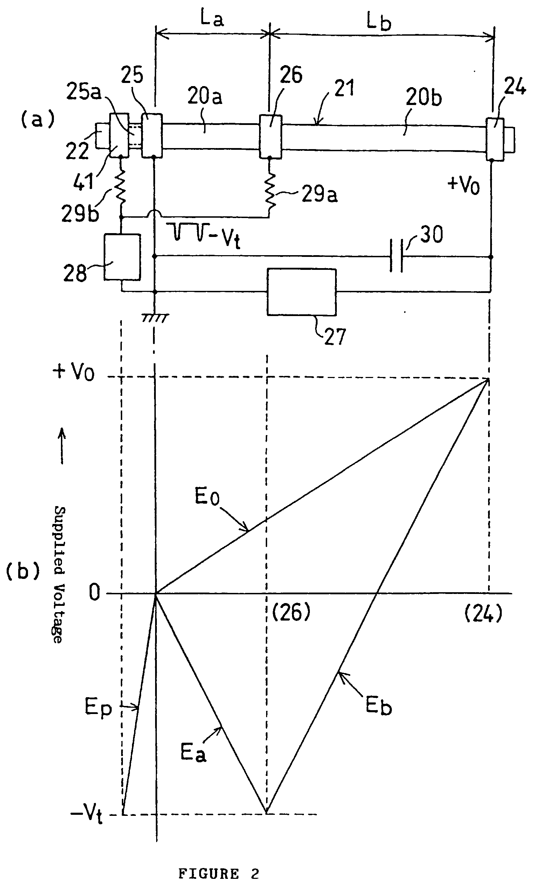

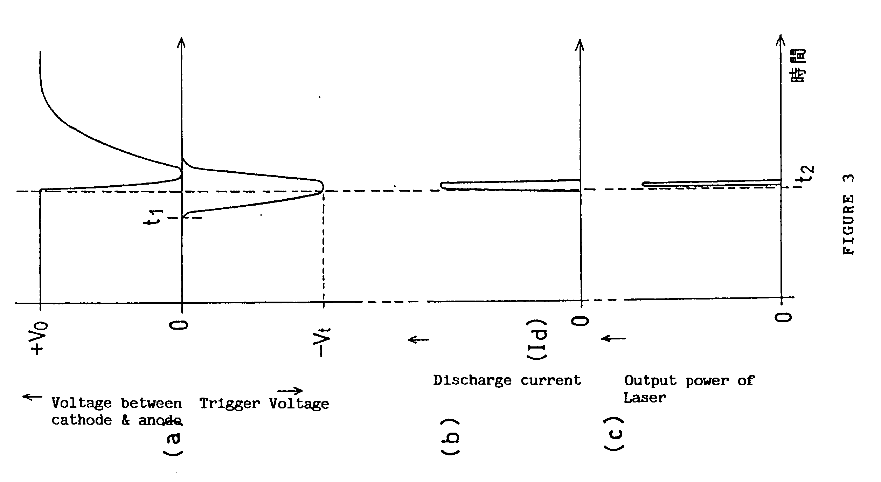

Then, the operation control method and an example of action of the laser-oscillating apparatus shown in Fig.1 will be described by Fig.2 and Fig.3. Distance La shown in Fig.2(a) represents the length of first discharging passage 20a between cathode 25 and intermediate electrode 26 of the gas laser tube in the direction of the axis, and distance Lb represents the length of second discharging passage 20b between intermediate electrode 26 and anode 24 of the gas laser tube in the direction of the axis. The ratio (Lb:La) of both lengths in this embodiment is arranged to be approximately (2:1). Besides, the length of each discharging passage formed in each cylinder portion of the discharge tube in the direction of the axis is sufficiently greater than the diameter of the discharging passage, namely the inner diameter of each cylinder portion. In contrast with the above, the length of dielectric cylinder 40 in the direction of the axis is a half or less, preferably one third of the length (La) of first discharging passage in the direction of the axis, wherein plasma cathode 25a is formed on the inner surface and inside region thereof in operation.

Therefore, between cathode 25 and anode 24 which are a pair of main discharging electrodes of the gas laser tube, a DC voltage not more than self-discharge starting voltage, i.e. positive voltage (+Vo) to anode 24 is supplied from first power source 27. Anode 24 is connected to the positive terminal of first power source 27 through second outer conducting body 32, conductor ring 34, and inner electrode 30b of coaxial capacitor 30, as obviously known by the structure shown in Fig.1. In contrast to this, cathode 25 is grounded through first outer conducting body 31.

Accordingly potential gradient Eo within discharge tube 21 between the cathode and the anode is approximately ( $Eo=Vo/(La+Lb)$ ), as shown by line Eo in Fig.2(b). Potential gradient Eo is the value at which self-discharge does not take place in the discharging passage, i.e. unless there are corona discharge and preliminary ionization region everywhere in the discharging passage, the main discharge does not take place at this potential gradient.

On the other hand, a negative pulse trigger voltage (-Vt) is supplied to intermediate electrode 26 via resistance 29a from second power source 28. And a negative pulse trigger voltage (-Vt) is also supplied to auxiliary electrode 41 via resistance 29b from second power source 28. Thus plasma cathode 25a is formed on the inner surface and inside region of dielectric cylinder 40, thanks to the trigger voltage (-Vt) supplied between cathode 25 of the ground potential and auxiliary electrode 41.

The potential gradients among the electrodes when the voltages like the above are supplied have the relation as shown in (b) of the Figure. Namely, the absolute value of the potential gradient Ea in the first discharging passage between cathode 25 and intermediate electrode 26, i.e. first cylinder portion 21a is approximately ( $Ea=-Vt/La$ ) which is shown as the line Ea in (b) of the Figure. Next, the absolute value of the potential gradient Eb in the second discharging passage between intermediate electrode 26 and anode 24, i.e. second cylinder portion 21b is approximately ( $Eb=(|Vo|+|Vt|)/Lb$ ) which is shown as the line Eb in (b) of the Figure. Also at the same time, the absolute value of the potential gradient Ep between cathode 25 which forms plasma cathode 25a and auxiliary electrode 41 is two times or more of the potential gradient Ea in first cylinder portion 21a, because the length of dielectric cylinder 40 in the direction of the axis is a half or less, preferably one third or less of the length (La) of first discharging passage 20a.

Owing to the potential gradient among the electrodes mentioned above, plasma cathode 25a is formed in the early stage within dielectric cylinder 40 between cathode 25 and auxiliary electrode 41, and furthermore the absolute values of potential gradients Ea, Eb by supplying a trigger voltage to intermediate electrode 26 are those which cause breakdown, generating corona discharge and preliminary ionization to both adjoining regions A, B of intermediate electrode 26 located in the middle of the first and the second discharging passages. As the ratio (Lb:La) of the discharging passages is set to be (2:1) in this embodiment, the absolute values of the potential gradients Ea, Eb of both discharging passages become equal to each other, by setting the absolute values of both supplied voltages equivalent, i.e. ($|Vo|=|Vt|$). Thus, breakdown takes place simultaneously or nearly simultaneously inside the first and the second discharging passages at the potential gradients Ea, Eb. Both supplied voltages (+Vo, -Vt) are arranged to have the above relation. Pulsed main discharge takes place, as plasma cathode 25a becomes a supplying source of electrons for main discharge. The main discharge current flows between cathode 25 and anode 24.

By supplying a trigger voltage to auxiliary electrode 41 and intermediate electrode 26 simultaneously, plasma cathode 25a is formed and corona discharge and preliminary ionization take place in intermediate electrode 26 and the discharging passage regions A, B adjacent to end 31b of the cathode side outer conducting body and end 32b of the anode side outer conducting body, both the regions above being positioned near the intermediate electrode. Accordingly, breakdown takes place simultaneously or nearly simultaneously inside both the discharging passages. When the breakdown, namely rapid fall of the insulation resistance between the cathode and the anode takes place, the electric charge stored in coaxial storage capacitor 30 is first supplied to end portion 32b of second outer conducting body 32 via dielectric ring 34, then conducted to anode 24 via outer conducting body 32, and finally supplied to the discharging passage. Thus the main discharge starts through both discharging passages, then the laser medium is activated and pulsed laser oscillation is generated.

Supplementary explanation about the operating condition of this embodiment will be done by means of Fig.3. As shown in (a) of the Figure, between the cathode and the anode, a voltage (+Vo) stored in the storage capacitor is supplied. Next, a pulsed trigger voltage (-Vt) increasing toward negative direction from a time t1 is added to the intermediate electrode, and then breakdown in the discharging passages takes place at a time t2.

At the time t2 of breakdown, a large main discharge current flows in a moment between the anode and the cathode as shown in (b) of the Figure. Thanks to the main discharge current Id, pulsed laser oscillation takes place as shown in (c) of the Figure and a laser output with a narrow pulse width of about 5 nanoseconds (n-sec) is obtained. The voltage between the both ends of the capacitors i.e. the voltage between the anode and the cathode decreases in a moment the by main discharge, and increases again by charging the coaxial storage capacitor after the main discharge finishing. This action repeats by supplying a pulsed trigger voltage corresponding to the repetition frequency of pulsed laser oscillation.

A pulsed laser output having an optional repetition frequency can be obtained in this manner. As the breakdown and the main discharge take place simultaneously or substantially simultaneously over the entire region of the discharging passages, high oscillation efficiency can be realized. Moreover, the output laser beam has circular cross section and uniform intensity distribution.

By setting the coaxial capacitor around the discharge tube mentioned above, charge transfer is done uniformly over the whole circumference and the impedance of the transferring path gets small, and consequently, pulsed laser oscillation of higher repetition can be obtained.

Furthermore, as the impedance of the circuit to supply a trigger voltage to the intermediate electrode and the auxiliary electrode for plasma cathode is set to be extremely high, the main discharge current does not naturally flow, and the current caused by supplying the trigger voltage is very small, and then there is no fear of spattering of the material of the intermediate electrode and the auxiliary electrode.

It is practically desirable that the trigger voltage (Vt) supplied to the intermediate electrode be opposite to the voltage supplied from the storage capacitor to the cathode or the anode with reference to polarity, as explained by the aforementioned embodiment, because voltage tolerance of each portion to which a high voltage is supplied does not need to be excessively high. However, if the voltage tolerance of each portion is enough necessarily, it is possible that the trigger voltage (Vt) supplied to the intermediate electrode and the voltage supplied from the storage capacitor to the cathode or the anode are set to have the same polarity, in order that the potential gradients of both discharging passages are equal or substantially equal to each other.

The embodiment mentioned above is a sample where the lengths (Lb:La) of both discharging passages between which the intermediate electrode intervenes are set to be approximately (2:1), and the peak value of the pulsed trigger voltage (Vt) is set to be the voltage of negative polarity equivalent to the voltage (Vo) between the cathode and the anode. However the length and the supplied voltage of each discharging passage are not limited to the embodiment but may be optionally set within the region in which the action similar to the above is obtained.

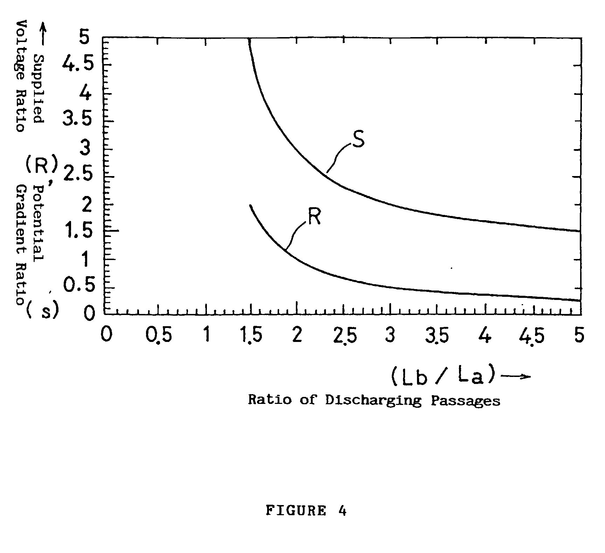

Fig.4 is a graph showing criteria of the option. The transversal axis in the Figure represents ratio (Lb:La) of both discharging passages, and the longitudinal axis represents ratio of the supplied voltages and the potential gradients of both discharging passages. Both the ratio of the supplied voltages and the ratio of the potential gradients are the values calculated using their absolute values. The curve R represents the result of calculation of the ratio ( $R=|Vt|/|Vo|$ ) of the trigger voltage (-Vt) at which the potential gradients (Ea, Eb) of both discharging passages become the same, to the voltage (Vo) between the cathode and the anode. The curve S represents the result of calculation of the ratio ( $S=(Ea, \text{ or } Eb)/Eo$ ) of the potential gradients (Ea, Eb) of both discharging passages at that moment, to the potential gradient (Eo) by the voltage (Vo) between the cathode and the anode.

Therefore, when the ratio (Lb/La) of both discharging passages is set for example to be 1.5, this graph represents that the ratio R of the supplied voltages at which the potential gradients (Ea, Eb) of both discharging passages become the same, is ( $R=|Vt|/|Vo|=2$ ), and the ratio S of the potential gradients is ( $S=(Ea \text{ or } Eb)/Eo=5$ ). When the ratio of both discharging passages is set to be for example 3, the graph represents that the ratio R of the supplied voltages at which the potential gradients of both discharging passages become the same, is 0.5, and the ratio of the potential gradient at that moment is 2.

Using such relations, the length of each discharging passage and each voltage supplied thereto are suitably set, however the ratio (Lb/La) of both discharging passages suitable for practical use are substantially in the range between 1.5 and 4.0. With regard to the ratio of supplied voltages, it is suitable that the ratio ( $S=(Ea \text{ or } Eb)/Eo$ ) of potential gradients is approximately in the range from 1.7 to 5.0 on the condition that the potential gradients of both discharging passages are equivalent. However, it is recommendable that the ratio (Ea/Eb) of both potential gradients is set to be $1.5\pm0.5$, preferably $1.0\pm0.3$, because breakdown takes place almost simultaneously, even if the potential gradients (Ea, Eb) of both discharging passages are not necessarily equivalent.

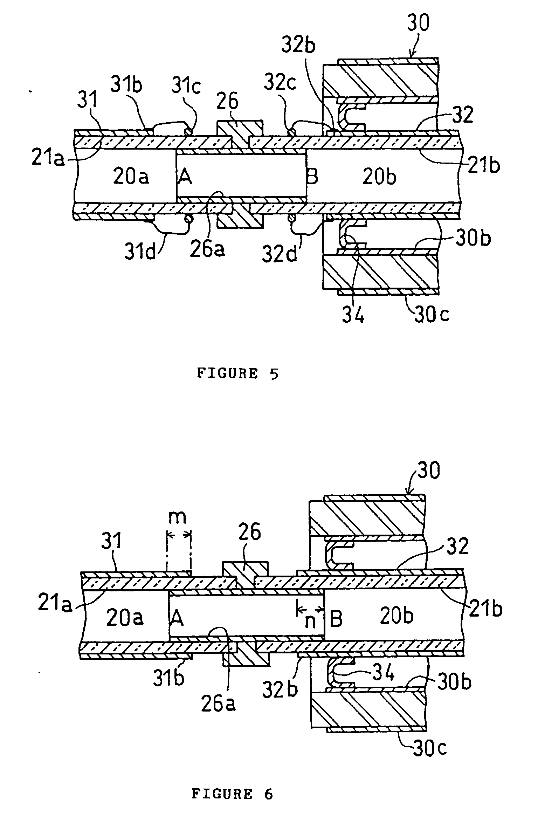

In the embodiment shown in Fig.5, narrow conductor rings 31c, 32c to concentrate an electric field are so arranged that they jut out with plural conductor connecting wires 31d, 32d, from each end of first outer conducting body 31 and second outer conducting body 32 positioned to be lengthened as far as the vicinity of intermediate electrode 26. Marrow conductor rings 31c, 32c may be arranged so as to lie just on the positions of the outer peripheries of the both ends of intermediate electrode cylinder portion 26a as shown in the Figure, or on the position adjacent thereto. It is capable to arrange the ring on just one of the outer conducting bodies.

In this embodiment, the electric field concentrates in narrow conductor rings 31c, 32c, so that corona discharge when the trigger voltage is supplied and preliminary ionization caused thereby take place efficiently, and consequently, good pulsed laser oscillation can be obtained.

In the embodiment shown in Fig. 6, intermediate electrode cylinder portion 26a overlaps the end portions 31b, 32b of both outer conducting bodies by predetermined distances m, n respectively in the direction of its length. In this embodiment, corona discharge in the discharging passages near the overlapped regions mentioned above and the preliminary ionization caused thereby take place efficiently, and consequently, good pulsed laser oscillation can be obtained.

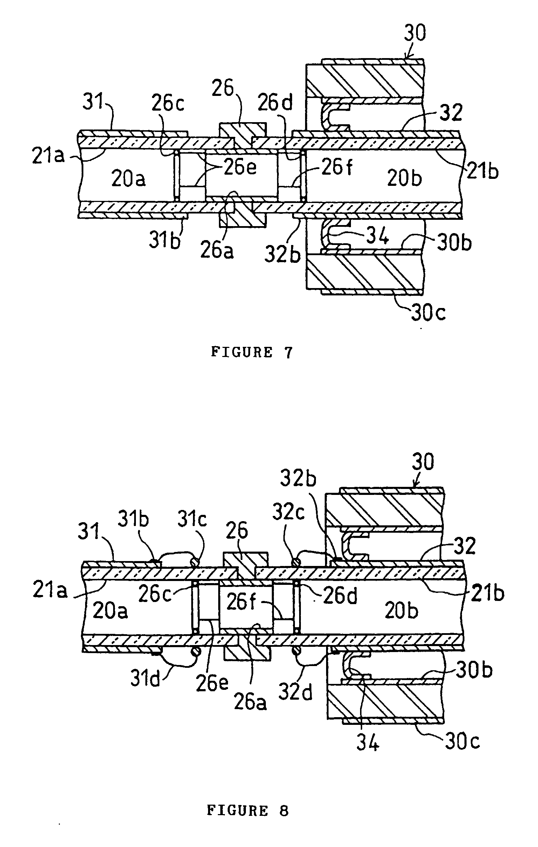

In the embodiment shown in Fig.7, narrow conductor rings 26c, 26d are arranged in the discharge tubes inside end portion 31b of the first outer conducting body and end portion 32b of the second outer conducting body, and connected electrically and supported mechanically to cylinder portion 26a of the intermediate electrode with three connecting wires 26e, 26f.

In this embodiment, a high electric field by supplying a trigger voltage generates in the vicinity of narrow conductor rings 26a, 26b connected to intermediate electrode 26, then corona discharge and preliminary ionization caused thereby are easier to take place.

In the embodiment shown in Fig.8, narrow outer conductor rings 31c, 32c are arranged to face narrow inner conductor rings 26c, 26d respectively at the both inner and outer sides of the discharging tube in the region between cylinder portion 26a of the intermediate electrode and end portion 31b of the first outer conducting body or end portion 32b of the second outer conducting body. In this embodiment, a higher electric field for triggering generates in the vicinity of the inner and outer conducting rings facing to each other, then corona discharge and preliminary ionization caused thereby are more easier to take place.

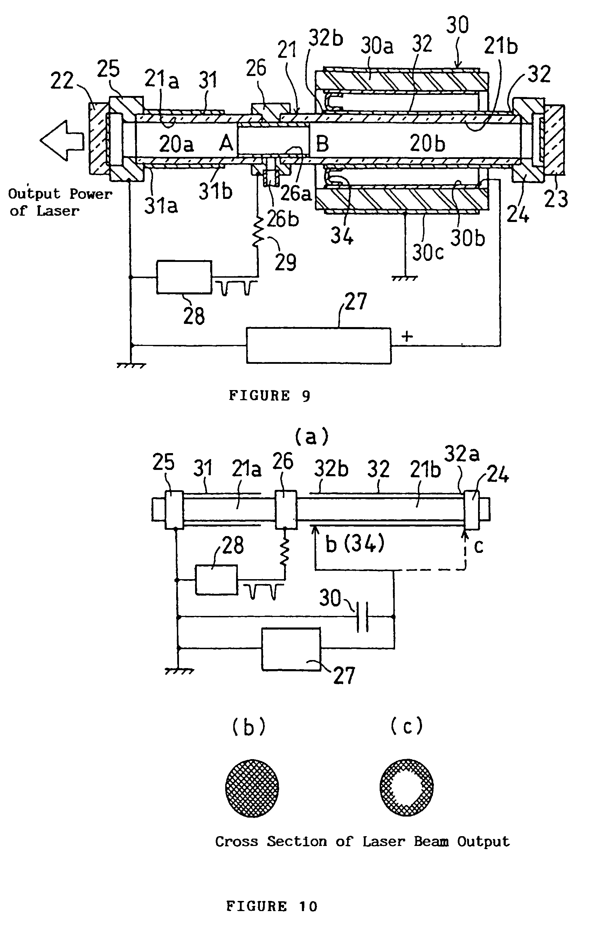

The inventors discovered the relations between the configuration of the cross section of an output laser beam and the intensity distribution thereof as shown in Fig.9 and Fig.10, with regard to a pulsed laser-oscillating apparatus by longitudinal excitation like the above. Namely, Fig.9 shows the embodiment which omits an auxiliary electrode forming a plasma cathode or a plasma anode. This is the apparatus which has high repetition pulsed laser oscillation, where a voltage between cathode 25 and anode 24 for main discharge is supplied from first power source 27 via coaxial storage capacitor 30, and a trigger pulsed voltage is supplied to intermediate electrode 26.

As shown in Fig.10(a), in the case where a cylindrical outer conducting body is positioned around the discharge tube at the side of the electrode to connect coaxial storage capacitor 30, i.e. at the side of the anode, and coaxial storage capacitor 30 is directly short-circuited to end portion 32b of the outer conducting body positioned close to intermediate electrode 26 to induce preliminary ionization in the main discharging passage, a circular output laser beam having uniform intensity distribution over its cross section is obtained as shown in Fig.(b) of the Figure.

On the contrary, when storage capacitor 30 is directly connected to end portion 32a of the other side of the outer conducting body or to the electrode connecting it, i.e. to anode 24 itself, the output laser beam has been fallen into what has an intensity distribution in which little laser light is at the center portion of its cross section, or so-called doughnut shaped intensity distribution as shown in Fig. (c) of the Figure.

The reason why a circular output laser beam whose cross section has uniform intensity distribution can be obtained, when coaxial storage capacitor 30 is directly short-circuited to end portion 32b of the outer conducting body lengthened in the vicinity of intermediate electrode 26 is thought to be as follows. First, a charge stored in coaxial storage capacitor 30 is transferred to end portion 32b of the outer conducting body positioned near the intermediate electrode, then causes preliminary discharge in regions B, A of the discharging passages near it, and next, moves from end portion 32b of the outer conducting body to the anode along the inner and outer surfaces of outer conducting body 32 at the velocity corresponding substantially to the light, and then causes field emission of electrons in the discharge tube, and finally causes breakdown of the main discharging passages. Thus, uniform plasma is generated in the discharge tube along the direction of discharge. Uniform main discharge takes place in the discharge tube, owing to the plasma and the preliminary ionization by a corona discharge in the vicinity of the intermediate electrode. The description mentioned heretofore is thought to be the reason. If there is a means to generate a plasma electrode on at least one of the cathode and the anode, generation of uniform main discharge over the whole discharging passages is further promoted.

Therefore, uniform discharge on the plane normal to the direction of discharge takes place, because electrons are uniformly emitted in the discharging passages thanks to corona discharge, preliminary ionization and transfer of the charge in the discharging passage of the region between end portion 32b of the second conductor body surrounding the discharge tube and the end portion of cylinder portion 26a of the intermediate electrode, caused by the breakdown of the discharging passages. Consequently, strong laser oscillation is generated even at the center of the cross section of the discharging passages, and an output laser beam having circular and uniform intensity distribution can be obtained. Such laser beam is usually transmitted to equipment utilizing laser light through an optical fiber with circular cross section.

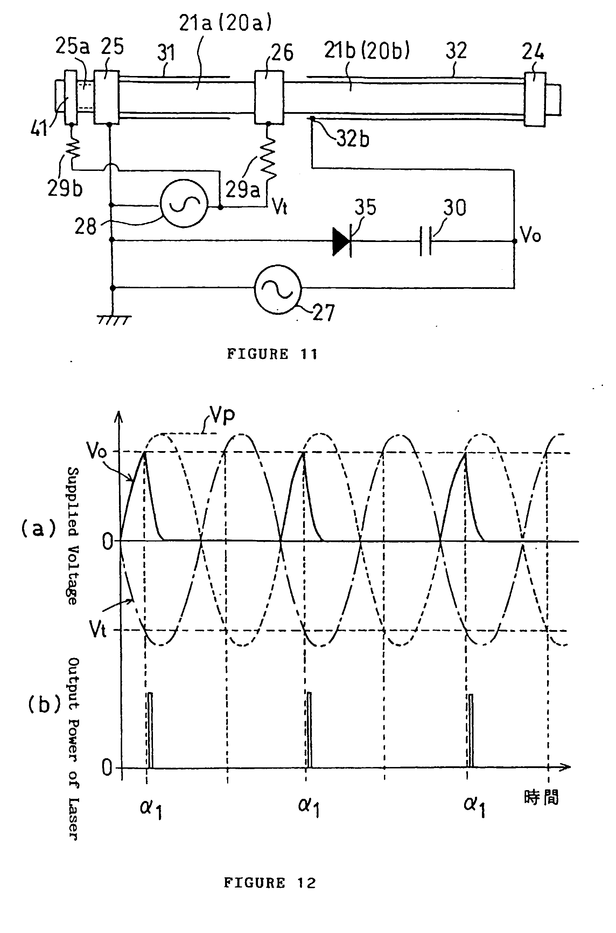

In the embodiment shown in Fig.11, both first power source 27 and second power source, i.e. trigger voltage source 28 are AC sources. Both power sources are organized so that they may have the same peak voltage having the frequency corresponding to the repetition frequency of the pulsed laser oscillation and exactly or substantially 180 degrees of phase difference to each other, as shown in Fig.12. In this case, diode 35 is serially connected to storage capacitor 30.

According to this embodiment, the main discharge takes place at the phase $\alpha 1$ of the voltage at which each alternate voltage makes breakdown in the discharge tube as shown in Fig.(a) of the Figure, and pulsed laser oscillation takes place as shown in Fig.(b) of the Figure. The voltage (Vo) of capacitor 30 is held to be as the peak value of substantially the AC source voltage charged in the capacitor as denoted by the mark Vp, if the main discharge does not take place. However, rising up and droping down of the voltage are repeated by the main discharge as denoted by the thick curve in the Figure, when the main discharge, namely the laser oscillation is repeated.

When the voltage for the main discharge is charged by DC, the laser output becomes smaller than that of AC drive, because the trigger voltage at which breakdown in the discharging passages takes place drops down in some cases, or the laser oscillation becomes unstable or jitters owing to deviation of rising-up speed of the trigger voltage in other cases. When AC drive is adopted like this embodiment, stable laser oscillation can be maintained because the timing of the breakdown hardly deviates. As the average voltages supplied to the power source elements, the capacitor, insulator parts etc. are smaller than that of DC, there is also an advantage of high reliability for the laser-oscillating apparatus, thanks to less deterioration of each element.

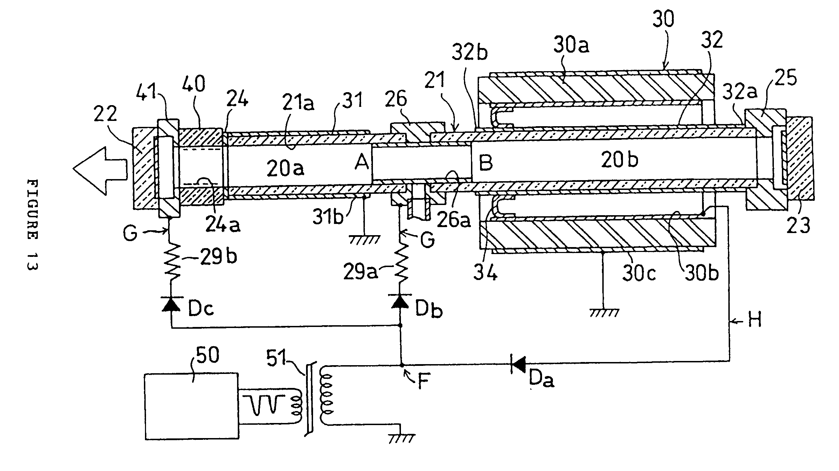

The embodiment shown in Fig.13 is a device which is driven and controlled using pulsed power source 50 only. Namely the device is set to supply each terminal the output voltage from pulsed power source 50 through pulse transformer 51. Mark Da is a diode storing negative charge for main discharge in storage capacitor 30, and marks Db and Dc are diodes supplying positive trigger pulses to intermediate electrode 26 and auxiliary electrode 41 respectively.

This embodiment has the structure where cathode 25 is in the right side of the Figure, and anode 24, auxiliary electrode 41 and dielectric cylinder 40 generating plasma anode 24a in the inside region thereof are in the left side of the Figure. Thus the main discharge current originates from positive ions of plasma anode 24a.

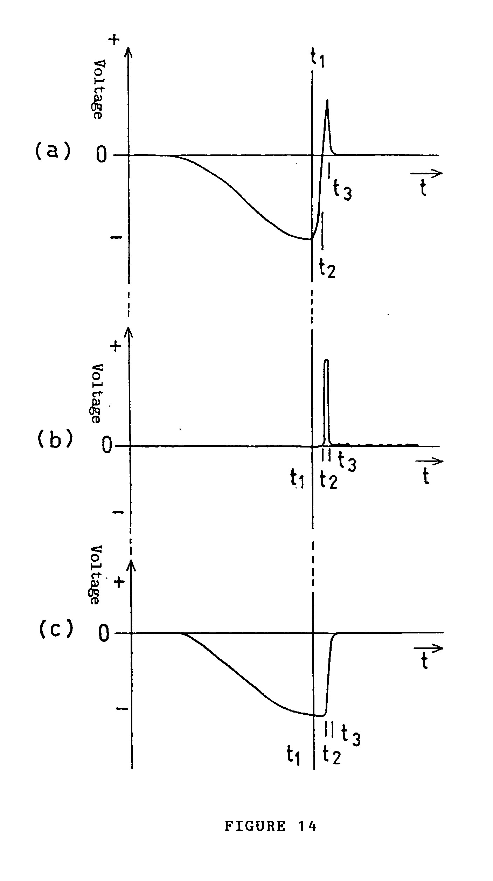

In the action of this embodiment, a negative pulsed peak voltage having a predetermined repetition frequency is generated from pulsed power source 50. At the point F of the secondary side of pulse transformer 51, a wave form as shown in Fig.14(a) appears. This wave form changes rapidly between time t1, time t2, and time t3 of the time axis. At the point G of the circuit connected to either intermediate electrode 26 or auxiliary electrode 41, a positive pulse voltage as shown in Fig.14(b) appears and is supplied thereto. Thereby plasma anode 24a is formed at the inside region of dielectric cylinder 40 intervening between anode 24 and auxiliary electrode 41, and the main discharge takes place caused by breakdown of both discharging passages by means of intermediate electrode 26.

On the other hand, at the point H of the circuit of capacitor 30 and cathode 25, storage of charge and instantaneous main discharge from t2 to t3 of the time axis take place, whose wave form is shown in Fig. 14(c). Therefore a laser beam having narrow pulse width is obtained from t2 to t3 of the time axis. Such action repeats in the same way as the above. According to this embodiment, a gap switch is not necessary, and a relatively high repetition pulse laser oscillation can be obtained. With reference to the explanation mentioned above, it is apparently available that a dielectric hollow cylinder and an auxiliary electrode positioned adjacent to the dielectric hollow cylinder are provided close to one of the cathode and the anode i.e. the first main electrode and the second main electrode, or close to both main electrodes, in order that a plasma electrode can be formed at the region inside the dielectric hollow cylinder in operation.

It is thought that a plasma electrode such as plasma cathode or plasma anode is formed as the result of complex action of surface corona discharge and creeping discharge at the inside of the dielectric hollow cylinder.

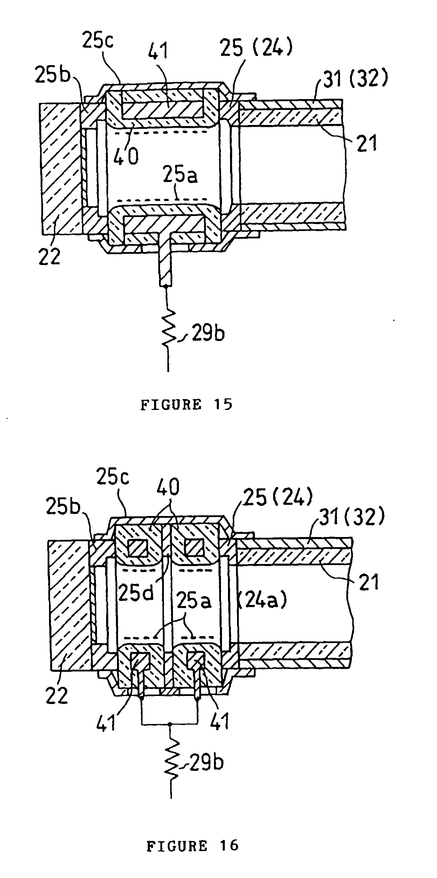

The embodiment shown in Fig.15 is another example of plasma electrode i.e. plasma cathode or plasma anode. In this embodiment, ring shaped auxiliary electrode 41 is provided surrounding the thin cylinder portion at the center of ceramics dielectric cylinder 40, and itself being further surrounded by another ceramics insulator cylinder. Thus auxiliary electrode 41 is buried actually in the dielectric cylinder. Cathode 25 and ring shaped auxiliary cathode 25b are provided at both ends of dielectric cylinder 40, and electrically short-circuited to each other by means of conductor cylinder 25 provided covering the outer periphery of conductor cylinder 40. A pulsed trigger power source not shown in the Figure is connected to auxiliary electrode 41 through high resistance element 29b.

According to the above, plasma electrode 25a is formed in operation at the region of the inner surface and inside of dielectric cylinder 40, thanks to the high voltage supplied between cathode 25 ( or anode 24 ) and auxiliary electrode 41. Moreover, the embodiment more surely prevents the main discharge current from flowing to auxiliary electrode 41, and occurrence of spattering is also prevented.

The embodiment shown in Fig.16 is an example where dielectric cylinder 40 is provided so as to be divided in plural pieces, for example two pieces. Auxiliary electrode 41 is set to surround each piece of dielectric cylinder 40 and to be practically buried therein. Ring shaped second auxiliary cathode 25d is provided between neighboring pieces of dielectric cylinder 40 and electrically short-circuited to cathode 25 and first auxiliary cathode 25b through conductor cylinder 25c intervening between them. A pulse trigger power source not shown in the Figure is connected to each auxiliary electrode 41 through high resistance element 29b. According to this embodiment, a plasma electrode is more easily formed at the inner surface and the inside region of each dielectric cylinder 40.

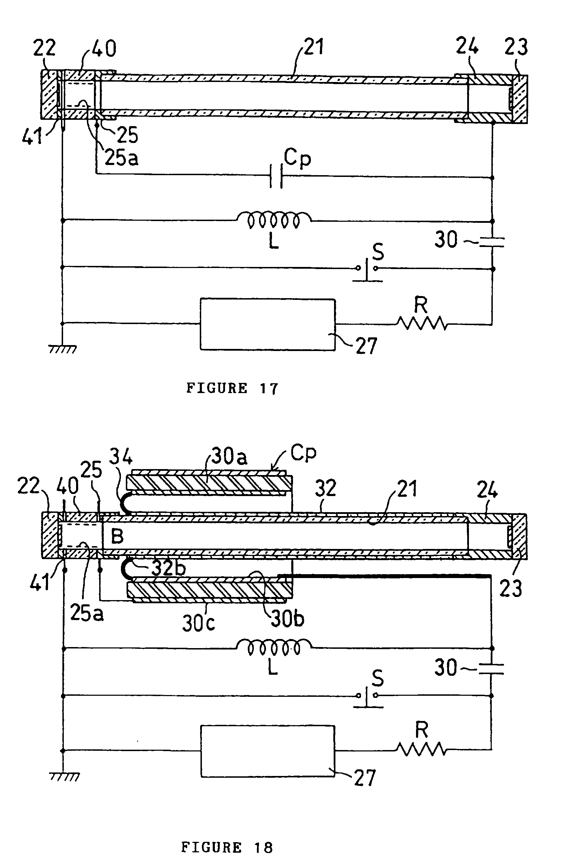

The embodiment shown in Fig.17 is a pulsed gas laser oscillator without intermediate electrode. In the Figure, mark 21 denotes single discharge tube, 24 denotes anode, 25a denotes plasma cathode, Cp denotes peaking capacitor, L denotes inductor, S denotes gap switch and R denotes protection resistance.

In the action of this embodiment, capacitor 30 is charged by high voltage source 27 via resistance R and inductor L, while switch S is off (open). When gap switch S is on (closed), the charge of capacitor 30 is transferred to peaking capacitor Cp. At this moment, plasma cathode 25a is formed inside dielectric cylinder 40, and breakdown in the discharging passage which leads to anode 24 takes place, then the laser medium is activated and consequently laser oscillation takes place. In this embodiment, the main discharge current flows between auxiliary electrode 41 of plasma cathode 25a and anode 24. However, as the supplying source of the main discharge current is the plasma cathode, bright spot and spattering from metal electrodes do not take place, so that stable pulsed laser oscillation can be maintained for a long time.

The embodiment shown in Fig.18 is constituted of discharge tube 21 wound by cylindrical outer conducting body 32 and coaxial peaking capacitor Cp arranged coaxially. Inner electrode 30b set on the inner surface of dielectric hollow cylinder 30a of coaxial capacitor Cp is connected electrically to storage capacitor 30 connected to power source 27, and mechanically and electrically bound to end portion 32b of cylindrical outer conducting body 32 lengthened in the vicinity of cathode 25, with conductor ring 34. On one hand, outer electrode 30c set on the outer surface of dielectric hollow cylinder 30a is electrically connected to cathode 25.

According to this embodiment, plasma cathode 25a is formed at the region of the inner surface and the inside of dielectric cylinder 40 between cathode 25 and auxiliary electrode 41 and the voltage between both ends of coaxial capacitor Cp is supplied between cathode 25 and cylindrical outer conducting body 32, then the near region B in the discharging passage is preliminarily ionized to induce the main discharge. A pulsed laser beam which has circular cross section and substantially uniform intensity distribution is gained in this way. Furthermore, as occurrence of bright spot or spattering owing to metal electrodes is suppressed, stable operation can be kept for a long time.

The embodiments shown in Fig.17 and Fig.18 are examples in which a switch such as gap switch drives laser oscillation. The switch can be replaced by a power source including a high voltage pulse generating circuit or a trigger pulse generating circuit having actually the same action as the switch. Thus a stable and long life pulsed gas laser oscillator can be obtained.

This invention is not necessarily limited to a construction forming a plasma electrode at one side of the cathode or the anode. It is also possible that a construction comprising cylindrical dielectric bodies in the vicinity of both the cathode and the anode and an auxiliary electrode located adjacent thereto, supplies a voltage to the auxiliary electrode in order that a plasma electrode is formed at the inside region of the dielectric hollow cylinder in operation. According to this construction, occurrence of bright spot or spattering of metal electrodes is further suppressed.

This invention can be applied not only to nitrogen ($N_2$) laser or excimer laser-oscillating apparatus emitting ultraviolet laser light but also widely to $CO_2$ laser or other pulsed gas laser oscillators. Moreover, though this invention is also applicable to a system where gas as laser medium is circulated from outside to the inside of the discharge tube, application to a type where the discharge tube is sealed off like the aforementioned embodiment is especially preferable for advantage of maintenance-free.

As mentioned above, according to this invention, a pulsed laser output having circular cross section and substantially uniform intensity distribution can be obtained with high repetition. Occurrence of bright spot or spattering of metal electrodes is suppressed and stable operation is maintained for a long time.

**Claims**

1. A pulsed gas laser oscillator comprising:

   a first main electrode, a cylindrical discharge tube of insulator containing medium gas therein to form a main discharging passage, and a second main electrode, those of which are longitudinally arranged in the above order, a pair of mirrors constituting an optical resonator outside said first main electrode and said second main electrode, and a power source supplying a voltage for main discharge between said first main electrode and said second main electrode,
   **characterized in that** said laser oscillator includes a dielectric hollow cylinder and an auxiliary electrode arranged adjacent to said dielectric hollow cylinder provided close to at least one of said first main electrode and said second main electrode, and an auxiliary electrode-voltage supplying device for supplying a voltage to said auxiliary electrode to form a plasma electrode at the region inside said dielectric hollow cylinder in operation.

2. The pulsed gas laser oscillator, as stated in Claim 1, wherein said auxiliary electrode is provided surrounding a portion of said dielectric hollow cylinder.

3. The pulsed gas laser oscillator, as stated in Claim 1, wherein an intermediate electrode to separate said discharge tube of insulator into a first insulating cylinder portion forming a first discharging passage therein and a second insulating cylinder portion forming a second discharging passage therein, said power source to supply a voltage not higher than self discharge starting voltage between said first main electrode and said second main electrode, and a trigger power source to generate laser oscillation when a trigger voltage by which breakdown takes place in said first discharging passage and said second discharging passage substantially simultaneously is supplied to said intermediate electrode are provided.

4. The pulsed gas laser oscillator, as stated in Claim 3, wherein said trigger power source supplies a pulsed trigger voltage synchronously to said auxiliary electrode forming said plasma electrode and to said intermediate electrode.

5. The pulsed gas laser oscillator, as stated in Claim 3, wherein a cylindrical conducting body is provided surrounding the insulating cylinder portion of at least one of said first insulating cylinder and said second insulating cylinder, one end of said cylindrical conducting body is electrically connected to said first main electrode or to said second main electrode, and the other end of said cylindrical conducting body is lengthened as far as the vicinity of said intermediate electrode.

6. The pulsed gas laser oscillator, as stated in Claim 3, wherein the length of said first discharging passage in the direction of the axis is not the same as the length of said second discharging passage in the direction of the axis.

7. The pulsed gas laser oscillator, as stated in Claim 6, wherein as to said first discharging passage and said second discharging passage, the longer length in the direction of the axis is in the range between 1.5 and 4.0 times of the shorter length in the direction of the axis.

8. The pulsed gas laser oscillator, as stated in Claim 3, wherein the absolute value of the potential gradient in said first discharging passage caused by supplying a trigger voltage to said intermediate electrode is equivalent to or $1.0\pm0.5$ times of the absolute value of the potential gradient in said second discharging passage.

**9.** The pulsed gas laser oscillator, as stated in Claim 3, wherein the absolute value of the potential gradient in the discharging passage close to said auxiliary electrode forming said plasma electrode is larger than the absolute value of the potential gradient of said first discharging passage or said second discharging passage.

**10.** The pulsed gas laser oscillator, as stated in Claim 3, wherein a thin conductor ring is electrically connected to at least one of said intermediate electrode and an end portion of the cylindrical outer conducting body lengthened as far as the vicinity of said intermediate electrode, and is provided protruding in the direction of the axis.

**11.** The pulsed gas laser oscillator, as stated in Claim 3, wherein the polarity of the voltage supplied to one of said main electrodes in contrast with the other of said main electrodes and the polarity of the trigger voltage supplied to said intermediate electrode are opposite to each other.

**12.** The pulsed gas laser oscillator, as stated in Claim 3, wherein the voltage supplied to one of said main electrodes in contrast with the other of said main electrodes and the trigger voltage supplied to said intermediate electrode are AC voltages having the same frequency and approximately 180° of phase difference to each other.

**13.** A pulsed gas laser oscillator comprising:

a first main electrode, a cylindrical discharge tube of insulator containing medium gas therein to form a main discharging passage, a second main electrode, those of which are longitudinally arranged in the above order, a pair of mirrors constituting an optical resonator outside said first main electrode and said second main electrode, and a power source supplying a voltage for main discharge between said first main electrode and said second main electrode,
**characterized in that** said power source includes a capacitor which has a figure of hollow cylinder and is provided surrounding said cylindrical discharge tube of insulator.

**14.** The pulsed gas laser oscillator, as stated in Claim 13, wherein the inner electrode of said capacitor is set on the inside wall of a dielectric hollow cylinder, the outer electrode of said capacitor is set on the outside wall of said dielectric hollow cylinder, and said inner electrode is connected electrically to one of said first main electrode and said second main electrode and to said power source.

**15.** The pulsed gas laser oscillator, as stated in Claim 13, wherein a cylindrical conductor is provided surrounding at least one portion of said cylindrical discharge tube of insulator, one end of said cylindrical conductor is electrically connected to one of said first main electrode or said second main electrode and the other end of said cylindrical conductor is lengthened to the direction of the other main electrode and electrically short-circuited to the inner electrode of said capacitor.

**16.** The pulsed gas laser oscillator, as stated in Claim 13, wherein an intermediate electrode to separate said discharge tube of insulator into a first insulating cylinder portion forming a first discharging passage therein and a second insulating cylinder portion forming a second discharging passage therein, said power source to supply a voltage not higher than self discharge starting voltage between said first main electrode and said second main electrode, and a trigger power source device to generate laser oscillation when a trigger voltage by which breakdown takes place in said first discharging passage and said second discharging passage substantially simultaneously is supplied to said intermediate electrode are provided.

**17.** The pulsed gas laser oscillator, as stated in Claim 16, wherein a cylindrical conducting body is provided surrounding the insulating cylinder portion of at least one of said first insulating cylinder and said second insulating cylinder, one end of said cylindrical conducting body is electrically connected to said first main electrode or to said second main electrode, and the other end of said cylindrical conducting body is lengthened as far as the vicinity of said intermediate electrode and electrically short-circuited to the inner electrode of said capacitor.

**18.** The pulsed gas laser oscillator, as stated in Claim 16, wherein the length of said first discharging passage in the direction of the axis is different from the length of said second discharging passage in the direction of the axis.

**19.** The pulsed gas laser oscillator, as stated in Claim 18, wherein as to said first discharging passage and said second discharging passage, the longer length in the direction of the axis is in the range between 1.5 and 4.0 times of the shorter length in the direction of the axis.

**20.** The pulsed gas laser oscillator, as stated in Claim 16, wherein the absolute value of the potential gradient in said first discharging passage caused by supplying a trigger voltage to said intermediate electrode is 1.0±0.5 times of the absolute value of the potential gradient in said second discharging passage.

21. The pulsed gas laser oscillator, as stated in Claim 13, wherein a dielectric hollow cylinder and an auxiliary electrode arranged adjacent to said dielectric hollow cylinder are provided close to at least one of said first main electrode and said second main electrode, and an auxiliary electrode-voltage supplying means to supply a voltage to said auxiliary electrode to form a plasma electrode at the region inside said dielectric hollow cylinder in operation.

FIGURE 1

FIGURE 2

FIGURE 3

FIGURE 4

FIGURE 5

FIGURE 6

FIGURE 7

FIGURE 8

FIGURE 9

(a)

(b)          (c)

Cross Section of Laser Beam Output

FIGURE 10

FIGURE 11

FIGURE 12

FIGURE 13

FIGURE 14

FIGURE 15

FIGURE 16

FIGURE 17

FIGURE 18

FIGURE 19

# INTERNATIONAL SEARCH REPORT

| | International application No. |
|---|---|
| | PCT/JP99/02584 |

**A. CLASSIFICATION OF SUBJECT MATTER**
Int.Cl$^6$ H01S3/038, H01S3/097

According to International Patent Classification (IPC) or to both national classification and IPC

**B. FIELDS SEARCHED**

Minimum documentation searched (classification system followed by classification symbols)
Int.Cl$^6$ H01S3/038, H01S3/097-3/0977

Documentation searched other than minimum documentation to the extent that such documents are included in the fields searched

| | | | |
|---|---|---|---|
| Jitsuyo Shinan Koho | 1940-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 1-103889, A (Hitachi,Ltd.), 20 April, 1989 (20. 04. 89), Full text (Family: none) | 1-21 |
| A | JP, 1-282880, A (Toshiba Corp.), 14 November, 1989 (14. 11. 89), Full text ; Figs. 1, 2 (Family: none) | 1-12, 21 |
| A | JP, 5-167157, A (Toshiba Corp.), 2 July, 1993 (02. 07. 93), Full text ; Fig. 1 (Family: none) | 13-21 |
| A | JP, 64-24479, A (NEC Corp.), 26 January, 1989 (26. 01. 89), Full text ; Figs. 1, 2 (Family: none) | 13-21 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 10 August, 1999 (10. 08. 99) | 17 August, 1999 (17. 08. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)